# EUROPÄISCHE PATENTANMELDUNG

(11) **EP 1 071 293 A2**
(43) Veröffentlichungstag der Anmeldung: **24.01.2001**
(21) Anmeldenummer: 00115518.3
(22) Anmeldetag: 19.07.2000
(51) Int. Cl.: H04N 9/64

(54) **Verfahren und Vorrichtung zur Wiedergabe eines zeilenflimmerreduzierten Grafiksignals auf einem mit Zeilensprungwiedergabe arbeitenden Fernsehdisplay**

(30) Priorität: 21.07.1999 DE 19934208
(71) Anmelder: GRUNDIG Aktiengesellschaft, 90471 Nürnberg (DE)
(72) Erfinder: Tödtmann, Thorsten, Dr., 90762 Fürth (DE); Herfet, Thorsten, Dr., 90762 Fürth (DE)

(57) **Zusammenfassung**

Die Erfindung betrifft ein Verfahren und eine Vorrichtung zur Wiedergabe eines zeilenflimmerreduzierten Graphiksignals auf einem mit Zeilensprungwiedergabe arbeitenden Fernsehdisplay. Das zeilensprungfreie Graphiksignal wird in einen Bildspeicher (12) eingeschrieben und als Zeilensprungsignal wieder aus diesem ausgelesen.

Weiterhin wird es einer vertikalen Filterung unterzogen. Das vertikal gefilterte Graphiksignal wird auf dem Fernsehdisplay dargestellt. Nach dem Einschreiben der Pixel des Graphiksignals in den Bildspeicher wird jeweils durch einen Vergleich mit einem oder mehreren in Vertikalrichtung benachbarten Pixel die Notwendigkeit einer Vertikalfilterung bezüglich dieses Pixels überprüft. Nach dieser Überprüfung wird jedem dieser Pixel eine Markierung zugeordnet, die das jeweilige Pixel als bereits überprüftes Pixel kennzeichnet. Dadurch wird eine unnötige Mehrfachfilterung vermieden.

## Beschreibung

Die Erfindung betrifft ein Verfahren zur Wiedergabe eines zeilenflimmerreduzierten Graphiksignals auf einem mit Zeilensprungwiedergabe arbeitenden Fernsehdisplay mit den im Oberbegriff des Anspruchs 1 angegebenen Merkmalen. Weiterhin betrifft die Erfindung eine Vorrichtung zur Wiedergabe eines zeilenflimmerreduzierten Graphiksignals mit den im Oberbegriff des Anspruchs 8 angegebenen Merkmalen.

Aus der Zeitschrift Fernseh- und Kino-Technik, 52. Jahrgang, Nr. 1+2/1998, Seiten 52 bis 57 und 64, ist es bekannt, auf einem Display Signale verschiedener Signalquellen, beispielsweise PC-Graphik, DVD- oder DVB-Signale und analoge Fernsehsignale, anzuzeigen. Dabei werden zum Erhalt einer guten Bildqualität drei unterschiedliche Betriebsmodi unterschieden. Ein erster Betriebsmodus ist die ausschließliche Darstellung von Fernsehbildsignalen, ein zweiter der reine VGA-Modus und der dritte die gemeinsame Darstellung von computergesteuerten Bildinformationen mit Fernsehsignalen als Split-Screen-Display oder als Bild-im-Bild. Im letztgenannten Fall kann entweder das VGA-Signal auf das Fernsehbildsignal oder umgekehrt das Fernsehbildsignal auf die VGA-Darstellung konvertiert werden.

Aus der Zeitschrift Fernseh- und Kino-Technik, 52. Jahrgang, Nr. 1+2/1998, Seiten 58 bis 64, ist bereits die Internet-Box WB1 der Anmelderin bekannt. Diese weist unter anderem einen digitalen Signalprozessor, einen Graphikcontroller und einen Bildspeicher auf. Mittels des Graphikcontrollers erfolgt eine Graphikaufbereitung, die sich auf anwendungsspezifische Charakteristika wie eine Nutzerführung und die Bedienelemente als auch auf technische Details zur Vorbereitung der Darstellung von Internet-Inhalten auf einem Fernsehgerät bezieht. Beispielsweise ist im bekannten Fall sichergestellt, daß für die internen Seiten der WB1 eine globale Einstellung durch den Benutzer erfolgen kann. Weiterhin sind bei der WB1 Maßnahmen zur Reduzierung des bei einer Wiedergabe auf 50-Hz-Zeilensprung-Geräten auftretenden Kantenflackerns vorgesehen. Hierzu bietet der verwendete Graphikcontroller die Möglichkeit einer Hardware-Flimmer-Reduktion. Diese wird bei Betrieb über die Scart-Buchse eingeschaltet und bei Betrieb über die VGA-Schnittstelle der Internet-Box zur Erhaltung der vollen Vertikalauflösung ausgeschaltet. Für eine flimmerfreie Wiedergabe von Texten werden spezielle Fonts eingesetzt. Die in die Nutzerschnittstelle integrierten Graphiken werden zur Vermeidung von Kantenflackern vertikal vorgefiltert.

Der Erfindung liegt die Aufgabe zugrunde, ein Verfahren und eine Vorrichtung mit den im Oberbegriff des Anspruchs 1 bzw. 8 angegebenen Merkmalen derart weiterzubilden, daß die Vertikalfilterung des Graphiksignals verbessert ist.

Diese Aufgabe wird durch ein Verfahren mit den im Anspruch 1 und durch eine Vorrichtung mit den im Anspruch 8 angegebenen Merkmalen gelöst. Vorteilhafte Ausgestaltungen und Weiterbildungen der Erfindung sind in den abhängigen Ansprüchen angegeben.

Die Vorteile der Erfindung bestehen insbesondere darin, daß durch die beanspruchte Markierung sichergestellt werden kann, daß keine mehrfache vertikale Filterung vorgenommen wird und damit keine unnötige Auflösungsreduktion erfolgt. Eine Überprüfung der Notwendigkeit einer Vertikalfilterung bezüglich eines bestimmten Pixels erfolgt nur dann, wenn das jeweilige Pixel noch nicht als bereits überprüft gekennzeichnet ist. Da Pixels, denen bereits eine Markierung zugeordnet ist, von einer erneuten Überprüfung ausgenommen werden, ist im Vergleich zum Stand der Technik, bei welchem jedes Pixel unabhängig davon, ob es sich geändert hat oder nicht, entsprechend verarbeitet wird, die Gesamtverarbeitungszeit reduziert. Weiterhin sind im Vergleich zu einer Filterung mittels einer dem Bildspeicher nachgeordneten Hardwareschaltung keine kostenintensiven externen Filter notwendig, deren Funktionalität und Adaptivität oft eingeschränkt ist.

Das beanspruchte Verfahren ermöglicht eine Software-Flimmerreduktion, die auf typischen Rechnerplattformen, beispielsweise Pentium-Rechner mit 166 MHz, unter typischen Belastungsbedingungen eine Filterrate von etwa 120 ms, bezogen auf ein Vollbild, ermöglicht. Diese Zeitspanne stellt gleichzeitig die Verzögerung dar, nach welcher die Bildinhalte in gefilterter Form vorliegen.

Mittels der in den abhängigen Ansprüchen angegebenen Merkmale wird erreicht, daß zur Abspeicherung des Markiersignals kein zusätzlicher Speicher zur Verfügung gestellt werden muß, sondern auf ohnehin vorhandenen, nicht benötigten Speicherplatz zurückgegriffen werden kann.

Bei Verwendung eines gemeinsamen Speichers für das Graphiksignal und das Fernsehsignal, die in verschiedenen Adressenbereichen dieses Speichers abgelegt sind, wird für den Fall einer gemeinsamen Anzeige dieser Signale auf dem Fernsehdisplay eine vereinfachte Speicheradressierung erreicht. Es ist keine Adressierung unterschiedlicher Speicher notwendig.

Mittels der Merkmale des Anspruchs 6 wird erreicht, daß das im Bildspeicher ebenfalls abgespeicherte Fernsehsignal von einer Vertikalfilterung ausgenommen wird. Damit wird dem Umstand Rechnung getragen, daß Fernsehsignale bei ihrer Erzeugung ohnehin bereits an das Zeilensprungverfahren angepaßt sind, so daß eine Vertikalfilterung unnötig ist und lediglich zu einem unerwünschten Auflösungsverlust führen würde.

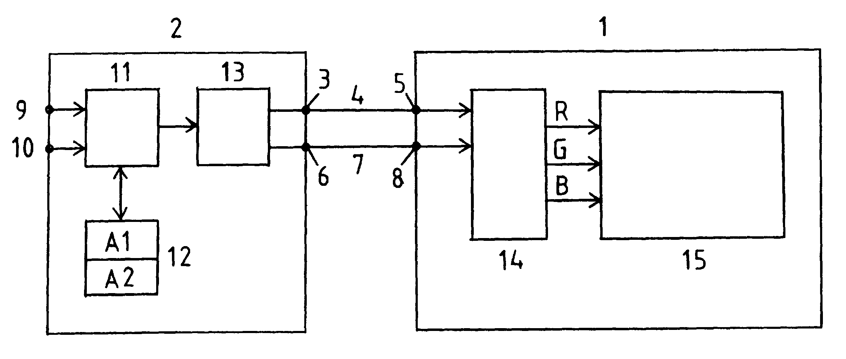

Weitere vorteilhafte Eigenschaften der Erfindung ergeben sich aus der Erläuterung eines Ausführungsbeispiels anhand der Figur.

Diese zeigt ein Blockschaltbild einer an einen Fernsehempfänger 1 angeschlossenen Internet-Box 2, wobei in der Figur lediglich die zum Verständnis der Erfindung notwendigen Baugruppen dieser Geräte gezeigt sind.

Die Internet-Box 2 ist über eine Scart-Buchse 3 und ein Scart-Kabel 4 mit der Scart-Buchse 5 des Fernsehempfängers 1 verbunden. Weiterhin weist die Internet-Box 2 eine VGA-Buchse 6 auf. Diese ist über ein Kabel 7 an eine VGA-Buchse 8 des Fernsehempfängers 1 angeschlossen. Die Signalausgabe in der Internet-Box erfolgt über einen Schalter 13, über welchen entweder am Ausgang 3 oder am Ausgang 6 Signale zur Verfügung gestellt werden.

Der Internet-Box 2 werden über einen ersten Eingangsanschluß 9 Fernsehsignale und über einen zweiten Eingangsanschluß 10 ein Graphiksignal zugeführt. Das Graphiksignal kann beispielsweise in einem nach dem HTML-Format übertragenen Internet-Signal enthalten sein und der Internet-Box 2 über eine ISDN-Telefonleitung zugeleitet werden. Das Fernsehsignal und das Graphiksignal werden über einen Mikrocomputer 11 einem Speicher 12 zugeführt und dort abgespeichert.

Der Speicher 12, der als RAM realisiert sein kann, weist zwei Speicherbereiche A1 und A2 auf. Der Speicherbereich A1 ist zur Abspeicherung des Fernsehsignals und der Speicherbereich A2 zur Abspeicherung des Graphiksignals vorgesehen.

In Abhängigkeit von einem eingegebenen Bedienbefehl kann grundsätzlich sowohl eine alleinige Darstellung eines Fernsehsignals als auch eine alleinige Darstellung eines Graphiksignals als auch eine gleichzeitige Darstellung von Graphik- und Fernsehsignal erfolgen, beispielsweise als Bild-im-Bild-Darstellung oder als Split-Screen-Darstellung.

Diese Darstellung erfolgt jeweils auf dem Bildschirm 15 des Fernsehempfängers 1, welcher Bildschirm 15 im folgenden stets als Fernsehdisplay bezeichnet wird, im Sinne einer Zeilensprung-Wiedergabe. Die Signalübertragung zwischen der Internet-Box 2 und dem Fernsehempfänger 1 erfolgt in diesem Fall über das Scart-Kabel 4. Im Fernsehempfänger 1 werden die wiederzugebenden Signale in einer Signalverarbeitungsschaltung 14 verarbeitet und an deren Ausgang in Form von R, G, B-Signalen zur Verfügung gestellt, die dann dem Fernsehdisplay 15 zugeführt werden.

Im folgenden wird lediglich der Fall einer gleichzeitigen Darstellung von Graphik- und Fernsehsignal betrachtet. Das über den Anschluß 9 empfangene Fernsehsignal wird - wie bereits oben ausgeführt wurde - über den Mikrocomputer 11 dem Bildspeicher 12 zugeführt und dort pixelweise in einem bestimmten Speicherbereich A1 abgespeichert. Das über den Anschluß 10 empfangene Graphiksignal wird pixelweise in den Speicherbereich A2 eingeschrieben.

Nach diesem Einschreiben werden die einzelnen Pixel des Graphiksignals einer Überprüfung dahingehend unterzogen, ob eine Vertikalfilterung bezüglich des jeweiligen Pixels notwendig ist oder nicht, um ein Auftreten von Zeilenflimmern zu vermeiden. Dies geschieht durch einen Vergleich des jeweiligen Pixelwertes mit dem Pixelwert eines oder mehrerer in Vertikalrichtung benachbarter Pixel.

Wird bei diesem Vergleich, der durch den Mikrocomputer 11 softwaremäßig durchgeführt wird, erkannt, daß keine Vertikalfilterung notwendig ist, dann wird dem jeweiligen Bildpunkt eine Markierung zugeordnet, die den Bildpunkt als bereits überprüftes Pixel kennzeichnet. Bei dieser Markierung handelt es sich vorzugsweise um ein Markierbit, welches an einem ohnehin vorhandenen, aber nicht benötigten Speicherplatz des Bildspeichers 12 abgespeichert wird. Bei diesem nicht benötigten Speicherplatz des Bildspeichers 12 kann es sich um redundante Zeilenbereiche des Bildspeichers handeln. Dies ist dann möglich, wenn der Bildspeicher - wie es bei vielen Graphikcontrollern der Fall ist - in Videozeilen fester Länge unterteilt ist und die tatsächliche Anzahl an Bildpunkten des Graphiksignals diese Länge unterschreitet. In diesem Fall entstehen redundante Bereiche des Bildspeichers, die zur Abspeicherung der den bereits überprüften Pixeln zugeordneten Markierbits verwendet werden können.

Alternativ dazu kann es sich bei dem nicht benötigten Speicherplatz um freie Bitbereiche des Bildspeichers handeln, die aufgrund der Anzahl der zur Abspeicherung der Farbwerte verwendeten Bits frei bleiben. So wird in vielen Fällen mit Farbauflösungen gearbeitet, die kein Vielfaches von 8 Bit sind. Ein Beispiel hierfür ist eine 15-Bit-Farbdarstellung, wobei jeweils 5 Bits für jede der Farben Rot, Grün und Blau verwendet werden. Da jedoch insgesamt Speicherplatz für 16 Bits zur Verfügung steht, ist ein Bit Speicherplatz redundant und kann zur Abspeicherung des Markierbits für das jeweilige Pixel verwendet werden.

Wird hingegen bei dem genannten Vergleich erkannt, daß eine Vertikalfilterung notwendig ist, dann wird zunächst diese Vertikalfilterung durchgeführt. Dabei werden in Abhängigkeit vom jeweils verwendeten Algorithmus die Pixelwerte der vertikal benachbarten Bildpunkte miteinander kombiniert und der abgespeicherte Pixelwert durch den neu ermittelten, gefilterten Pixelwert ersetzt. Ferner wird auch hier dem aktuellen Bildpunkt eine Markierung zugeordnet, die ihn als bereits überprüften Bildpunkt kennzeichnet. Die Abspeicherung dieser Markierung erfolgt ebenso wie es bereits oben beschrieben wurde.

Die Überprüfung auf die Notwendigkeit einer Vertikalfilterung und die eventuelle Durchführung dieser Vertikalfilterung erfolgt lediglich für das Graphiksignal und nicht für das zusammen mit diesem auf dem Fernsehdisplay 15 darzustellende Fernsehsignal. Denn bei letzterem handelt es sich um ein beispielsweise mittels einer Fernsehkamera aufgenommenes Signal, welches bereits bei seiner Erzeugung an eine spätere Zeilensprungwiedergabe angepaßt wird. Eine zusätzliche Vertikalfilterung eines derartigen Fernsehsignals würde in Bezug auf Zeilenflimmern keine Verbesserung bringen, sondern lediglich einen unnötigen Auflösungsverlust in Vertikalrichtung zur Folge haben.

Vorstehend wurde die Erfindung im Zusammenhang mit einem aus einem Internet-Signal abgeleiteten Graphiksignal erläutert, wobei die beanspruchte Flimmerreduktion in einer einem Fernsehempfänger vorgeschalteten Internet-Box durchgeführt wird. Die Erfindung ist jedoch nicht auf dieses Ausführungsbeispiel beschränkt. Beispielsweise kann das Graphiksignal auch anderweitig erzeugt werden, die beanspruchte Flimmerreduktion im Fernsehempfänger selbst erfolgen oder die Internet-Box in den Fernsehempfänger integriert sein.

## Patentansprüche

1. Verfahren zur Wiedergabe eines zeilenflimmerreduzierten Graphiksignals auf einem mit Zeilensprungwiedergabe arbeitenden Fernsehdisplay, bei welchem das zeilensprungfreie Graphiksignal in einen Bildspeicher eingeschrieben und als Zeilensprungsignal aus dem Bildspeicher ausgelesen wird, bei welchem das Graphiksignal einer vertikalen Filterung unterzogen wird, und das vertikal gefilterte Graphiksignal auf dem Fernsehdisplay dargestellt wird,
**dadurch gekennzeichnet,**
daß die Pixel des Graphiksignals nach ihrem Einschreiben in den Bildspeicher jeweils durch einen Vergleich zum Beispiel mit einem oder mehreren in Vertikalrichtung benachbarten Pixel auf die Notwendigkeit einer Vertikalfilterung hin überprüft werden und nach dieser Überprüfung jedem dieser Pixel eine Markierung zugeordnet wird, die das jeweilige Pixel als bereits überprüftes Pixel kennzeichnet.

2. Verfahren nach Anspruch 1,
**dadurch gekennzeichnet,**
daß die Markierung ein Markierbit ist und/oder daß die Markierung an zur Abspeicherung des Graphiksignals nicht benötigten Speicherplätzen des Bildspeichers abgespeichert wird und/oder daß die Zeilenlänge des Bildspeichers größer ist als diejenige Zeilenlänge, die zur Abspeicherung aller Pixelwerte einer Zeile des Graphiksignals notwendig ist, und die nicht benötigten Speicherplätze die redundanten Zeilenbereiche des Bildspeichers sind und/oderdaß die Anzahl der zur Abspeicherung der Farbwerte der Pixels verwendeten Bits kleiner ist als die Anzahl der zur Abspeicherung der Farbwerte der Pixel zur Verfügung gestellten Bits des Bildspeichers und die nicht benötigten Speicherplätze die redundanten Bitbereiche des Bildspeichers sind.

3. Verfahren nach einem der vorhergehenden Ansprüche,
**dadurch gekennzeichnet,**
daß bei erkannter Notwendigkeit einer Vertikalfilterung die Pixelwerte vertikal benachbarter Bildpunkte im Sinne einer Vertikalfilterung miteinander kombiniert werden und der jeweils zugehörige, in den Bildspeicher eingeschriebene Pixelwert durch einen gefilterten Pixelwert ersetzt wird.

4. Verfahren nach einem der vorhergehenden Ansprüche,
**dadurch gekennzeichnet,**
daß außer den Pixeln des Graphiksignals auch Pixel eines Fernsehsignals in den Bildspeicher eingeschrieben werden und der Bildspeicher zum Auslesen der Signale derart adressiert wird, daß eine gemeinsame Darstellung des Graphiksignals und des Fernsehsignals auf dem Fernsehdisplay erfolgt und/oderdaß das Graphiksignal und das Fernsehsignal auf dem Fernsehdisplay als Split-Screen-Bild dargestellt werden.

5. Verfahren nach einem der vorhergehenden Ansprüche,
**dadurch gekennzeichnet,**
daß das Graphiksignal und das Fernsehsignal als Bild-im-Bild-Signal auf dem Fernsehdisplay dargestellt werden.

6. Verfahren nach einem der Ansprüche 4 oder 5,
**dadurch gekennzeichnet,**
daß im Bildspeicher lediglich das Graphiksignal einer zeilenflimmerreduzierenden Signalverarbeitung unterworfen wird.

7. Verfahren nach einem der vorhergehenden Ansprüche,
**dadurch gekennzeichnet,**
daß die zeilenflimmerreduzierende Signalverarbeitung des Graphiksignals in einer einem Fernsehempfänger vorgeschalteten Internet-Box erfolgt und das zeilenflimmerreduzierte Graphiksignal über einen Scart-Ausgang der Internet-Box und ein Scart-Verbindungskabel an eine Scart-Buchse eines Fernsehempfängers übertragen wird und/oderdaß das Graphiksignal aus einem Internetsignal abgeleitet wird.

8. Vorrichtung zur Wiedergabe eines zeilenflimmerreduzierten Graphiksignals auf einem mit Zeilensprungwiedergabe arbeitenden Fernsehdisplay, mit
- einem Bildspeicher, der zur Umwandlung eines zeilensprungfreien Graphiksignals in ein Zeilensprung-Graphiksignal vorgesehen ist,
- einem Vertikalfilter, das zu einer vertikalen Filterung des Graphiksignals dient, und
- einem Fernsehdisplay zur Darstellung des vertikal gefilterten Zeilensprung-Graphiksignals,
**dadurch gekennzeichnet,**
daß sie einen Mikrocomputer (11) aufweist, der derart programmiert ist, daß er nach dem Einschreiben der Pixel des Graphiksignals in den Bildspeicher (12) durch einen Vergleich der Pixelwerte einander in Vertikalrichtung benachbarter Pixel die Notwendigkeit einer Vertikalfilterung überprüft und nach dieser Überprüfung jedem überprüften Pixel eine Markierung zuordnet, die dieses Pixel als bereits überprüftes Pixel kennzeichnet.

9. Vorrichtung nach Anspruch 8,
**dadurch gekennzeichnet,**
daß der Bildspeicher (12) nicht benötigte Speicherplätze aufweist, die zur Abspeicherung der Markierungen vorgesehen sind und/oderdaß die nicht benötigten Speicherplätze redundante Zeilenbereiche des Bildspeichers (12) sind und/oderdaß die nicht benötigten Speicherplätze redundante Bitbereiche an den zur Abspeicherung der Farbwerte der Pixels vorgesehenen Speicherplätzen des Bildspeichers (12) sind.

10. Vorrichtung nach einem der Ansprüche 8 oder 9,
**dadurch gekennzeichnet,**
daß der Mikrocomputer (11) derart programmiert ist, daß er bei erkannter Notwendigkeit einer Vertikalfilterung die Pixelwerte vertikal benachbarter Bildpunkte im Sinne einer Vertikalfilterung miteinander kombiniert und den jeweils zugehörigen, in den Bildspeicher (12) eingeschriebenen Pixelwert durch einen gefilterten Pixelwert ersetzt.

11. Vorrichtung nach einem der Ansprüche 8 bis 10,
**dadurch gekennzeichnet,**
daß der Bildspeicher (12) einen ersten Speicherbereich (A1) aufweist, der zur Abspeicherung des Graphiksignals dient, und einen zweiten Speicherbereich (A2), der zur Abspeicherung eines Fernsehsignals dient und/oder daß das Fernsehdisplay (15) zur gemeinsamen Darstellung des vertikalgefilterten Graphiksignals und des Fernsehsignals dient, wobei das Graphiksignal und das Fernsehsignal als Split-Screen-Bild oder als Bild-im-Bild-Signal dargestellt werden.

12. Vorrichtung nach einem der Ansprüche 8 bis 11,
**dadurch gekennzeichnet,**
daß der Bildspeicher (12) und der Mikrocomputer (11) Bestandteile einer Internet-Box (2) sind und/oderdaß die Internet-Box (2) eine Scart-Buchse (3) aufweist und über ein Scart-Kabel (4) mit einer Scart-Buchse (5) des Fernsehempfängers (1) verbunden ist.
